(19) **Europäisches Patentamt / European Patent Office / Office européen des brevets**

(11) **EP 1 213 825 B1**

(12) **EUROPEAN PATENT SPECIFICATION**

(45) Date of publication and mention
of the grant of the patent:
**20.01.2010 Bulletin 2010/03**

(51) Int Cl.:
***H02M 7/219*** *(2006.01)*

(21) Application number: **01000631.0**

(22) Date of filing: **14.11.2001**

(54) **Full-wave rectifier**

Vollwellengleichrichter

Redresseur à double alternance

(84) Designated Contracting States:
**AT BE CH CY DE DK ES FI FR GB GR IE IT LI LU MC NL PT SE TR**

(30) Priority: **17.11.2000 US 249591**

(43) Date of publication of application:
**12.06.2002 Bulletin 2002/24**

(73) Proprietor: **Texas Instruments Incorporated
Dallas, Texas 75251 (US)**

(72) Inventor: **Gharpurey, Ranjit
Plano, TX 75086 (US)**

(74) Representative: **Holt, Michael et al
Texas Instruments Limited
European Patents Department
800 Pavilion Drive
Northampton NN4 7YL (GB)**

(56) References cited:
**US-A- 4 053 796    US-A- 4 314 326
US-A- 4 360 866    US-A- 4 609 863
US-A- 4 887 047**

**Description**

FIELD OF THE INVENTION

The present invention relates to full-wave rectifier circuits, and, more particularly, to a full-wave rectifier having a unity magnitude slope close to the origin.

BACKGROUND OF THE INVENTION

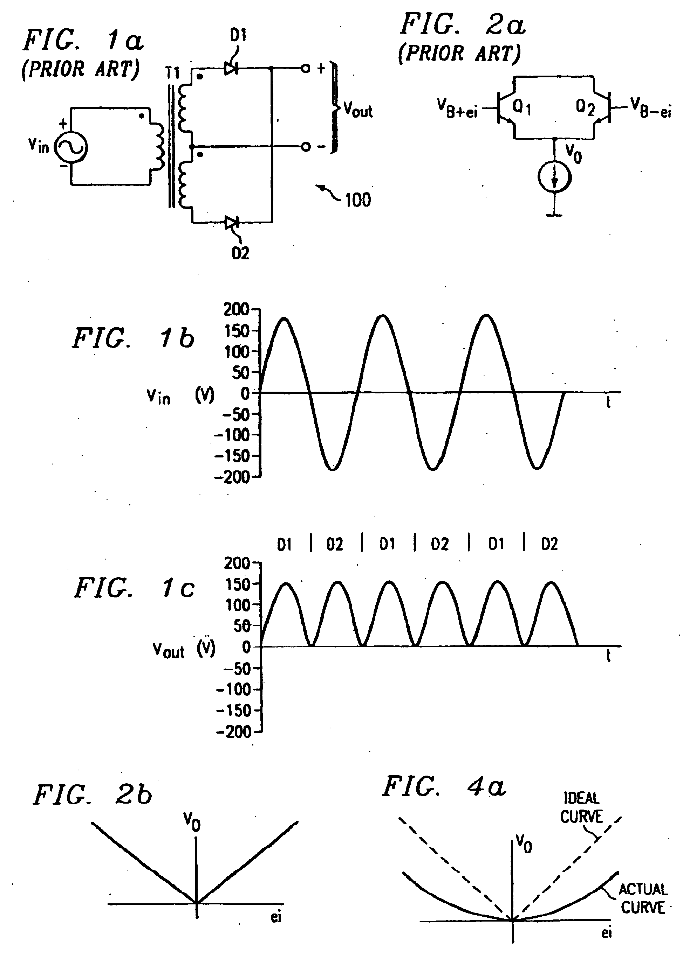

Rectifiers are the fundamental building blocks in DC power supplies of all types and in DC power transmission used by some electric utilities. Specifically, full-wave rectifiers are often used in analog circuits for power detection of a received or transmitted signal. A single-phase full-wave rectifier circuit, shown in Figure 1a, with the accompanying input and output voltage waveforms (Figure 1b and 1c, respectively) includes a center tapped transformer $T_1$ coupled to a pair of diodes D1 and D2, wherein each diode conducts on opposite half-cycles of the input voltage. As shown in Figure 1c, while diode D1 conducts the first half-cycle of the input signal shown in Figure 1b, diode D2 is off. During the second half-cycle, diode D2 conducts while diode D1 is off. The circuit changes a sinusoidal waveform with no dc component (zero average value) to one with a dc component of

$$\frac{2V_{peak}}{\pi},$$ where the root mean square (rms) value of the output is 0.707 $V_{peak}$. This implementation is not preferred in an integrated circuit (IC) form since it is difficult to implement transformers in an IC. Further the use of diodes as shown has an electrical problem since the stage that drives the diodes can get severly loaded by the diodes and may need to provide high amounts of current.

Another implementation of the single-phase full-wave rectifier circuit, shown in Figure 2a, may include a differential amplifier pair of transistors in lieu of the diode pair. Differential signals $V_B + v_i$ and $V_B - v_i$ are applied at the base of the two transistors $Q_1$ and $Q_2$, where $V_B$ is the bias voltage and $v_i$ is the input voltage. The full-wave rectified voltage signal $V_o$ is observed at the common emitter nodes of the two devices $Q_1$ and $Q_2$. An approximate transfer characteristic is shown in Figure 2b. For bipolar devices that follow an exponential $I_c$ vs. $V_{gs}$ relationship, the output voltage $V_o$ is represented by:

$$V_o\alpha \; \ln(\text{sech}(\theta_i/2V_T)$$

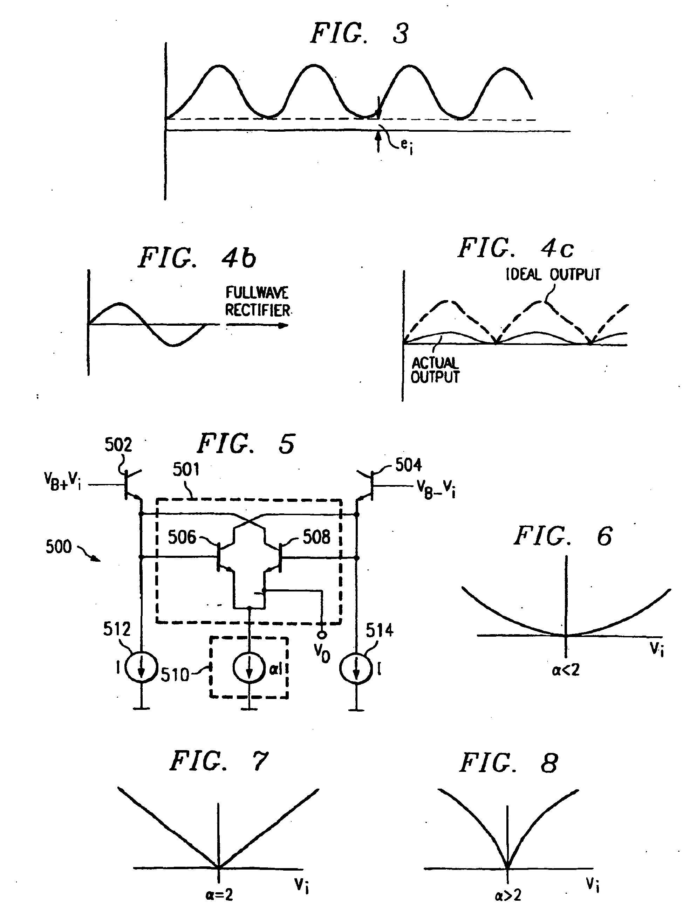

where $V_T$ is the thermal voltage which is equivalent to the Boltzmann constant, k, multiplied by the temperature, T, divided by the charge, q (kT/q).
The current approach suffers from reduced accuracy for small amplitudes of the signal. Specifically, this circuit has a dead zone close to its zero crossing. An ideal transfer function of the full-wave rectifier circuit is shown in Figure 4a. A practically realizable transfer function of the circuit of Figure 2a is shown in Figure 4b. The dead zone near the zero crossing leads to the appearance of an error voltage ei, in response to a sinusoidal input as shown in Figure 3. The effect of the dead zone is that the DC voltage output, for small amplitude inputs is much smaller compared to the ideal case. Mathematically, the unity magnitude slope for the implementation of Figure 2a is approached only for $\theta_i \gg V_T$. Thus, when both voltages applied to the differential pair are approximately equivalent, the linear relationship is violated. There, however, is a soft transition between the two extreme cases. It translates into a region where the full-wave rectification is not accurate, giving an offset error $e_i$ to the rectified voltage as shown in Figure 3.
Most current solutions suffer from reduced accuracy for small amplitudes of the signal. Specifically, this circuit suffers from a dead-zone close to its zero crossing as shown in Figure 3, since the functional form shown in Figure 2b does not have a unity magnitude slope close to the origin. Moreover, the unity magnitude slope is approached only for $\theta_i \gg V_T$, in which case sech $(\theta_i/2V_T)$ equals $\alpha \exp (-|\theta_i|/2V_T)$. Thus, $V_o\alpha - |\theta_i|$, which has a slope of unity magnitude.
The non-unity slope near the zero-crossing causes problems in the rectification of very small signals, where $\theta_i < 2V_T$, as shown in Figure 4a, 4b and 4c. The output voltage of the rectifier is very much smaller than the ideal case.
US patent 4,053,796 (van de Plassche) discloses a solution for a rectifying circuit.
One approach to solve this problem is to use amplification before the rectifier, but this requires increased power dissipation and reduces the upper limit of the dynamic range. The dynamic range is reduced by a factor of the reciprocal of the amplification. Further, the pre-amplifier needs to be linear over the range of input signals applied.
For example, where the amplification is 10 and the signals to be rectified have peak-to-peak excursions of 0.3 volt, the full-wave rectifier circuit would require 3 volts to operate. This presently is difficult in an IC implementation. Thus, there is a dynamic range tradeoff in which it is possible to rectify a signal from a smaller voltage input but it is not possible for larger voltages.
Thus, a need exists for an accurate full-wave rectification circuit having a unity magnitude slope close to the origin.

SUMMARY OF THE INVENTION

To address the above-discussed deficiencies of the biasing circuitry for single-ended circuits, the present invention teaches a full-wave rectifier having a unity magnitude slope close to the origin. In particular, a full-wave rectifier in accordance with the present invention includes an emitter coupled pair circuit coupled to a bias circuit. At least one constant current source couples to the base of each transistor in the emitter coupled pair circuit. A pair of transistors cross-couple across the emitter coupled pair circuit. These cross-coupled devices are used as positive feedback to increase gain for small amplitude signals and to degenerate the devices of the full-wave rectifier. Using this design very precise rectification can be achieved even for $\theta_i < V_T$.

Specifically, the bias circuit includes a current source which supplies $\alpha$ multiplied by the current supplied by the current source connected to the base of the transistors in the emitter coupled pair circuit. By choosing an appropriate value of $\alpha$, a unity magnitude slope close to the origin is achieved.

BRIEF DESCRIPTION OF THE DRAWINGS

For a more complete understanding of the present invention, reference is now made to the following description taken in conjunction with the accompanying drawings in which like reference numbers indicate like features and wherein:

Figure 1a is a known embodiment of a single-phase full wave rectifier circuit;
Figure 1b is a diagram of the input voltage sequence vs. time;
Figure 1c is a diagram of the ideal output voltage sequence vs. time;
Figure 2a is another known embodiment of a single-phase full wave rectifier circuit;
Figure 2b is the transfer characteristic of the input voltage sequence vs. the output voltage sequence of the circuit shown in Figure 2a;
Figure 3 is a diagram of the actual output voltage sequence vs. time for the circuit shown in Figure 2a;
Figure 4a is the transfer characteristic of the ideal and actual input voltage sequence vs. output voltage sequence of the circuit shown in Figure 2a;
Figure 4b is a diagram of the input voltage sequence vs. time of the circuit shown in Figure 2a;
Figure 4c is a diagram of the ideal output voltage sequence vs. time of the circuit shown in Figure 2a;
Figure 5 is an embodiment of a single-phase full wave rectifier circuit in accordance with the present invention;
Figure 6 is the transfer characteristic of the input voltage sequence vs. the output voltage sequence of the circuit shown in Figure 5 for $\alpha < 2$;
Figure 7 is the transfer characteristic of the input voltage sequence vs. the output voltage sequence of the circuit shown in Figure 5 for $\alpha \cong 2$; and
Figure 8 is the transfer characteristic of the input voltage sequence vs. the output voltage sequence of the circuit shown in Figure 5 for $\alpha > 2$.

DETAILED DESCRIPTION OF PREFERRED EMBODIMENTS

In Figure 5, a full-wave rectifier circuit 500 includes a cross-coupled differential pair circuit 501 coupled to a bias circuit 510. At least one constant current source 512 and 514 couples to the base of each transistor 506 and 508 in the cross-coupled pair circuit 501. A differential pair of transistors 502 and 504 drive the cross-coupled coupled pair circuit 501. These cross-coupled devices 506 and 504 are used as positive feedback to increase gain for small amplitude signals and to degenerate the devices 502 and 504 of the full-wave rectifier. Using this design very precise rectification can be achieved even for $\theta_i < V_T$.

Specifically, the bias circuit 510 includes a current source which supplies $\alpha$ multiplied by the current supplied by current sources 512 and 514 connected to the bases of the transistors 506 and 508 in the emitter coupled pair circuit 501. By choosing an appropriate value of $\alpha$, a unity magnitude slope close to the origin is achieved.

The positive feedback is used to get a rectified to zero voltage output accurately. The cross coupled transistors 506 and 508 effectively represent negative resistance which counters the positive resistance of the differential pair 502 and 504 in the region of the crossover. The impedance into each emitter 502 and 504 is $1/g_m$ which is substantial. The positive feedback tends to alter that positive resistance. It introduces a negative resistance in the emitters of devices 502 and 504. Looking into the each transistor's 506 and 508 base, a small negative impedance exists which helps to correct for any inaccuracy brought about by the finite impedance of the differential pair 502 and 504.

If the positive feedback is not implemented, as shown in Figure 6, the transfer characteristic exhibits a parabolic shape close to zero. After the positive feedback is applied, as shown in Figure 7, sharpening of the transfer characteristic exists. The parabolic behavior is lost for a certain value of $\alpha$, which represents the ratio of the emitter currents. Setting $\alpha$ approximately equal to 2, gives the optimal transfer curve as shown in Figure 7. Choosing different values of $\alpha$, different behaviors can be synthesized close to $\theta_i = 0$ as shown in Figures 6-8.

The reader's attention is directed to all papers and documents which are filed concurrently with this specification and which are open to public inspection with this specification.

All the features disclosed in this specification (including any accompany claims, abstract and drawings) may be replaced by alternative features serving the same, equivalent or similar purpose, unless expressly stated otherwise. Thus, unless expressly stated otherwise, each feature disclosed is an example only of a generic series of equivalent or similar features.

The terms and expressions which have been employed in the foregoing specification are used therein as terms of description and not of limitation, and there is no intention in the use of such terms and expressions of excluding equivalents of the features shown and described or portions thereof, it being recognized that the scope of the invention is defined and limited only by the claims which follow.

## Claims

1. A full-wave rectifier circuit (500) comprising:

   an emitter coupled pair circuit (501) having two pair of input nodes and one output node;
   a bias circuit (510) coupled to the output node of the emitter coupled pair circuit;
   at least one constant current source (512, 514), **characterised in that** each constant current source is coupled to an input node of the first input node pair; and that
   a pair of transistors (502; 504) is cross-coupled to the emitter coupled pair circuit (501), the first and second transistor (502, 504) each having a respective base, emitter and collector, each emitter coupled to an input node of the first and the second input node pair.

2. The full-wave rectifier circuit of claim 1, wherein the emitter coupled pair circuit (501) comprises a first and a second transistor (506, 508) each having a respective base, emitter and collector, the emitters of the first and second transistor coupled to the output node, the base of each first and second transistor coupled to one of the at least two input nodes.

3. The full-wave rectifier circuit of claim 1 or claim 2, wherein the bias circuit (510) comprises a second constant current source ($\alpha$I) supplying a current equivalent to $\alpha$ multiplied by the current supplied by the at least one current source.

4. The full-wave rectifier circuit of any of claims 1-3, wherein the base of the first transistor (502) is coupled to a voltage source at a voltage $V_E + v_i$, the base of the second transistor (504) is coupled to a voltage source at a voltage $V_B - v_i$, where $V_B$ is the bias voltage and $v_i$ is the input voltage.

## Patentansprüche

1. Vollweggleichrichtungsschaltung (500) mit

   einer emittergekoppelten (501) Paarschaltung mit zwei Paaren von Eingangsknoten und einem Ausgangsknoten;
   einer Biasschaltung (510), die mit dem Ausgangsknoten der emittergekoppelten Paarschaltung gekoppelt ist
wenigstens einer Konstantstromquelle (512, 514), **dadurch gekennzeichnet, dass**
jede Konstantstromquelle mit einem Eingangsknoten des ersten Eingangsknotenpaares gekoppelt ist und, dass
ein Transistorpaar (502, 504) mit der emittergekoppelten Paarschaltung (501) gekreuzt gekoppelt ist, wobei der erste und der zweite Transistor (502, 504) jeweils Basis, Emitter und Kollektor aufweisen und jeder Emitter mit einem Eingangsknoten des ersten und zweiten Eingangsknotenpaares gekoppelt ist.

2. Vollweggleichrichtungsschaltung gemäß Anspruch 1, wobei die emittergekoppelte Paarschaltung (501) einen ersten und einen zweiten Transistor (506, 508) umfasst, die jeweils Basis, Emitter und Kollektor aufweisen, wobei die Emitter des ersten und des zweiten Transistors an den Ausgangsknoten und die Basen des ersten und des zweiten Transistors mit wenigstens einem der zwei Eingangsknoten gekoppelt ist.

3. Vollweggleichrichtungsschaltung gemäß Anspruch 1 oder 2, wobei die Biasschaltung (510) eine zweite Konstantstromquelle ($\alpha$I) umfasst, welche einen Konstantstrom bereitstellt, der $\alpha$ multipliziert mit dem Strom der wenigstens einen Stromquelle entspricht.

4. Vollweggleichrichtungsschaltung gemäß einem der Ansprüche 1 bis 3, wobei die Basis des ersten Transistors (502) mit einer Spannungsquelle mit einer Spannung $V_E + v_i$ gekoppelt ist, und die Basis des zweiten Transistors (504) mit einer Spannungsquelle mit einer Spannung $V_E - v_i$ gekoppelt ist, wobei $V_E$ die Bias-Spannung und $v_i$ die Eingangsspannung ist.

## Revendications

1. Circuit redresseur à double alternance (500) comprenant :

   un circuit à paire couplée à un émetteur (501) comportant deux paires de noeuds d'entrée et un noeud de sortie ;
   un circuit de polarisation (510) couplé au noeud de sortie du circuit à paire couplée à l'émetteur ;
   au moins une source de courant constant (512, 514), **caractérisée en ce que** chaque source de courant constant est couplée à un noeud d'entrée de la première paire de noeuds d'entrée ; et **en ce**
   **qu'**une paire de transistors (502 ; 504) est couplée par couplage croisé au circuit à paire couplée à l'émetteur (501), les premier et second transistors (502, 504) ayant chacun une base, un émetteur et un collecteur respectifs, chaque émetteur étant couplé à un noeud d'entrée des première et seconde paires de noeuds d'entrée.

2. Circuit redresseur à double alternance selon la revendication 1, dans lequel le circuit à paire couplée à l'émetteur (501) comprend un premier et un second transistors (506, 508) comportant chacun une base, un émetteur et un collecteur respectifs, les émetteurs des premier et second transistors étant couplés au noeud de sortie, la base de chacun des premier et second transistors étant couplée à l'un des au moins deux noeuds d'entrée.

3. Circuit redresseur à double alternance selon la revendication 1 ou la revendication 2, dans lequel le circuit de polarisation (510) comprend une seconde source de courant constant ($\alpha$I) fournissant un courant équivalent à $\alpha$ multiplié par le courant fourni par la ou les sources de courant.

4. Circuit redresseur à double alternance selon l'une quelconque des revendications 1 à 3, dans lequel la base du premier transistor (502) est couplée à une source de tension à une tension $V_B + V_i$, la base du second transistor (504) est couplée à une source de tension à une tension $V_B - V_i$, où $V_B$ est la tension de polarisation et $V_i$ est la tension d'entrée.

FIG. 1a
(PRIOR ART)

FIG. 2a
(PRIOR ART)

FIG. 1b

$v_{in}$ (V)

FIG. 1c

$v_{out}$ (V)

D1 | D2 | D1 | D2 | D1 | D2

FIG. 2b

$v_0$

ei

FIG. 4a

IDEAL CURVE

$v_0$

ACTUAL CURVE

ei

6

## FIG. 3

$e_i$

## FIG. 4b

FULLWAVE
RECTIFIER

## FIG. 4c

IDEAL OUTPUT

ACTUAL
OUTPUT

## FIG. 5

502

$V_{B+}V_i$

501

504

$V_B-V_i$

500

506   508

512

$V_0$

514

I   510   $\alpha I$   I

## FIG. 6

$\alpha<2$   $V_i$

## FIG. 7

$\alpha=2$   $V_i$

## FIG. 8

$\alpha>2$   $V_i$

**EP 1 213 825 B1**

**REFERENCES CITED IN THE DESCRIPTION**

**Patent documents cited in the description**

- US 4053796 A, van de Plassche